# EUROPEAN PATENT APPLICATION

(11) **EP 1 361 713 A1**
(43) Date of publication of application: **12.11.2003**
(21) Application number: 02010086.3
(22) Date of filing: 06.05.2002
(51) Int. Cl.: H04L 12/66, H04L 29/06

(54) **Gateway device**

(71) Applicant: Sony International (Europe) GmbH, 10785 Berlin (DE)
(72) Inventor: Krusche, Arndt, c/oSony International (Europe)GmbH, 70327 Stuttgart (DE); Wilde, Matthias, c/oSony International(Europe)GmbH, 70327 Stuttgart (DE); Hagg, Wilhelm, c/oSony International (Europe) GmbH, 70327 Stuttgart (DE); Mosig, Rüdiger, c/oSony International (Europe)GmbH, 70327 Stuttgart (DE)
(74) Representative: Müller - Hoffmann & Partner

(57) **Abstract**

A gateway device (GW) is suggested for connecting and communicating between at least a first and a second wired or wireless communication system, in which said gateway device (GW) is a generic gateway device being dynamical and/or adjustable with respect to the addition and/or removal of at least one wired or wireless communication system (DBj, NB), protocol conversion or protocol conversion data, data stream encoder and/or decoder data, bus or device presentation data, and/or the like.

## Description

The present invention relates to a gateway device for connecting and communicating between at least a first and a second wired or wireless communication system or bus system.

In networks consisting of a plurality of devices each device has for external connection and communication a device bus or device bus system or wired or wireless communication system. For connecting the different devices to each other within said network, a network bus or network bus system is necessary to which the device buses or device bus systems are connected for data and/or control exchange. In the following the notion wired or wireless communication system and bus system are used equivalently.

For connecting said device buses with said network buses a so-called gateway, gateway device or bridge device is necessary to make the formats and rates of exchanged stream data, control data and/or the like compatible with each other. Conventionally, each gateway or gateway device has fixed properties with respect to the device to be connected, on the one hand, and the network to which the device is connected, on the other hand.

Therefore, conventionally, ensuring flexibility and reliability when building-up networks of changing architectures is a difficult task when using conventional gateway devices or bridge devices.

It is an object of the present invention to provide a gateway device or bridge device which ensures in a particular flexible and reliable manner the connection and communication between devices and networks.

The object is achieved by a gateway device according to the preamble of claim 1 with the characterizing features of claim 1.

Preferred embodiments are within the scope of the dependent sub-claims.

The inventive gateway device for connecting and/or communicating between at least a first and a second wired or wireless communication system is characterized in that said gateway device is a generic gateway device being dynamical and/or adjustable with respect to the addition and/or the removal of at least one wired or wireless communication system, the protocol conversion or protocol conversion data, data stream encoder and/or decoder data, bus or device presentation data, and/or the like.

In contrast to prior art gateway devices, the inventive gateway device is built-up as a generic gateway device. The property of being a generic gateway device is in particular realized by the dynamical and/or adjustable properties of the inventive gateway device with respect to several properties of the wired or wireless communication systems to be connected to each other. These properties may be the aspects of adding and/or removing one or a plurality of wired or wireless communication systems. Additionally or alternatively, the inventive gateway device is dynamical and/or adjustable with respect to a protocol conversion and/or the respective protocol conversion data describing the protocol conversion. Further additionally or alternatively, the inventive generic gateway device is dynamical and/or adjustable with respect to data describing data stream encoder and/or decoder. Furtheron, the presentation or representation of buses and/or of devices and further aspects are managed in a dynamical and/or adjustable way by the generic gateway device according to the present invention. Therefore, the inventive gateway device is capable of realizing connections and/or communication in a flexible and reliable manner.

Said first and second wired or wireless communication systems may be in each case device buses or network buses. In the sense of the invention, each bus is a device and/or a managing method for realizing connections and/or communication. Therefore, in the sense of the invention, connecting a distinct device, for instance a camcorder, to a distinct other device, for instance the home network, is referred to as connecting the device bus, i. e. of the camcorder in this example, to the other device bus, i. e. to the network bus of the home network.

In the sense of the invention, each of said devices to be connected may be a network, so that in the sense of the invention the inventive gateway device may be used for connecting different wired or wireless communication systems of different networks, each network consisting in each case of different devices.

According to a preferred embodiment of the invention, the inventive gateway device is adapted to dynamically load and/or remove protocol conversion data and/or modules for protocol conversions. In particular, this is done depending on buses, devices, wired and/or wireless communication systems to be connected.

It is in particular preferred that the inventive gateway device is adapted to dynamically load and/or remove data stream decoder and/or data stream encoder data. This is in particular done depending on the needs of different data stream formats to be communicated by the inventive gateway device.

Furtheron, it is preferred to have the inventive gateway device adapted to dynamically obtain, load and/or remove bus presentation data and/or device presentation data.

As a consequence, according to the above described measures in contrast to conventional gateway devices or bridge devices the inventive structure for a gateway device ensures high flexibility and reliability when connecting and/or communicating between wired or wireless communication systems.

It is of further advantage when the gateway device is adapted to bring and/or to present devices and/or wired or wireless communication systems to be connected to and on a uniform and abstract communication layer.

According to a further advantageous embodiment of the present invention the gateway device is adapted to enable the generation and/or representation of virtual devices which directly correspond to physical devices and/or wired or wireless communication systems to be connected.

Therefore, a further basic aspect of the present invention is to realize - starting from real and physical devices and wired or wireless communication systems - an abstract and general description, presentation and representation of the distinct devices and/or wired or wireless communication systems to be connected by the gateway device.

Is is also preferred that the gateway device according to the present invention is adapted to enable and/or to establish direct communication between said virtual devices.

Furtheron, said abstract communication layer contains or is built-up by an UPnP-structure over an IP-structure.

Furtheron, the inventive gateway device is capable of interfacing to and/or between non-IP-networks, in particular i-LINK, MOST, Bluetooth, and/or the like.

Additionally or alternatively, the inventive gateway device is capable of interfacing to and/or between IP-networks, in particular IEEE 802.11, IEEE 802.2, GPRS, and/or the like.

The inventive gateway device advantageously contains and/or realizes a physical and/or a data link layer, which is in particular capable of having wired or wireless communication systems interfaced thereto.

Furtheron, the inventive gateway device comprises for each wired or wireless communication system to be interfaced different hardware blocks within said physical and/or data link layer.

It is preferred that the inventive gateway device contains and/or realizes a bus driver layer having bus drivers for each of said wired or wireless communication system to be connected and/or to be interfaced.

The inventive gateway device then contains and/or realizes hardware adaptation layers for each of said wired or wireless communication systems to be connected and/or to be interfaced, so as to enable interfacing between said hardware blocks and said bus driver layer and/or said bus drivers.

Additionally, in this case the inventive gateway device is capable of installing and/or loading said hardware adaptation layers from an internal memory. Additionally or alternatively, the gateway device is capable of installing and/or loading said hardware adaptation layers from external data bases or hardware adaptation data bases. This is done in particular upon detection of newly connected hardware and/or in particular under control of an operating system provided.

It is further preferred that specific functionalities are realized in distinct bus drivers which are in particular capable of providing interfaces of asynchronous and/or isochronous data to higher layers.

It is further preferred that the inventive gateway device is capable of installing and/or loading said bus drivers from an internal memory and/or from external data bases, in particular from bus driver data bases, and further in particular upon detection of newly connected hardware and/or in particular under control of an operating system provided.

The inventive gateway device preferably contains and/or realizes a device driver layer having in particular a plurality of device drivers.

Also in this case it is preferred that the gateway device is capable of installing and/or loading said device drivers from an internal memory and/or from external data bases, in particular from external device driver data bases. This is in particular done upon detection of newly connected hardware and/or in particular under control of an operating system provided.

According to a further preferred and advantageous embodiment of the present invention, the gateway device contains and/or realizes an adaptation layer or device proxy layer having a plurality of modules and/or a plurality of presentations.

The modules are realized as device proxies and/or as gateway proxies.

Additionally, this device driver layer and in particular said device driver are adapted to interface between said bus driver layer and/or said bus drivers and said adaptation layer.

Furtheron, said adaptation layer or device proxy layer is capable of installing and/or loading said modules from an internal memory and/or from external data bases, in particular from external proxy data bases and/or external presentation data bases and further in particular upon detection of newly connected hardware and/or in particular under control of an operating system provided.

It is the further idea of the present invention that a proxy manager is provided which is adapted to load and/or unload said device proxies, said gateway proxies and/or said presentations.

Preferably, said plurality of presentations is adapted to form an abstract layer.

Further, the modules or proxies are capable of providing an adaptation of device driver APIs to the abstract layer, said adaptation comprising the adaptation and/or the translation of the specific device and service discoveries, command sets, eventing and/or the like, to respective equivalent abstract discoveries, control, eventing functionalities, respectively.

Additionally, the device proxies are capable of presenting device functionalities to said abstract layer.

Advantageously, the gateway proxies are capable of presenting abstract services - in particular presented by proxies of other wired or wireless communication systems - to a native wired or wireless communication system.

It is of further advantage, if the inventive gateway device is capable of tunneling said abstract layer of several wired or wireless communication systems to be connected and/or interfaced, in particular without additional adaptation and/or translation.

The abstract layer is in particular capable of employing an UPnP-structure for said service discovery, eventing and/or presentation functionalities.

The abstract layer is additionally or alternatively capable of employing an IP-structure for addressing and routing within said abstract layer.

Further, the inventive gateway device is adapted for loading said presentations together or in conjunction with said modules or proxies.

Alternatively or additionally, the inventive gateway device is adapted to use said presentations as interfaces of the functionalities to an external user.

A further adaptation is provided to use said presentations directly or in a way overruled by a control device for presenting a given device to an external user in a different way.

The inventive gateway device may also be capable of transcoding streams of data or data streams on different wired or wireless communication systems so as to ensure interoperability of devices to be connected or to be interfaced.

In this case one or a plurality of codecs is provided for processing said streams or data streams and in particular for carrying out said tanscoding.

Preferably, a stream manager is provided for determining necessary coding schemes.

In this case, the inventive gateway device is capable of installing and/or loading said codecs from an internal memory and/or from external data bases, in particular from external codec data bases. This is in particular done upon detection of newly connected hardware and/or under control of an operating system provided.

The inventive gateway device may be capable of tunneling said stream data or data streams in the transport protocol of the abstract layer of or over several wired or wireless communication systems to be connected and/or to be interfaced.

Furtheron, a shared memory may be provided for interfacing said codecs and said stream data or data streams.

In this case said shared memory is adapted to be managed by said stream manager. Furtheron, said stream manager may be adapted to manage said shared memory.

The stream manager may be adapted to manage the connection between different devices.

According to another aspect of the present invention a resource manager is provided which is adapted to be aware of bus resources, such as bandwidths, numbers of streams, and/or the like.

Said resource manager may be adapted to be responsible for rejecting requests which go beyond said available resources.

According to a further alternative of the present invention a memory manager is provided for managing available internal memories of the gateway device.

Said memory is preferably part of the operating system.

The involved internal memories may be chosen from the group of flash memories, hard disc memories, and/or the like.

The involved external memories, and in particular the external data bases may be internet sources, floppy discs, CR-ROMs, and/or the like.

### Further inventive embodiments are described in the following:

The inventive gateway device for interconnecting different kinds of networks on both the transport and/or the application layer has the flexibility to support future services and/or devices on the different networks.

Preferably, the inventive gateway device is adapted to use services and/or devices across different kinds of networks.

It is also preferred that the inventive gateway device is adapted to offer full support to add new network technologies on both the transport and the application level or layer by simply adding new gateways to an existing network without changing the existing gateways.

According to the invention, service interoperability is achieved by a common service discovery protocol. Additionally or alternatively, the inventive gateway device is adapted to map transport specific service definition to the common service discovery protocol.

According to a further preferred embodiment of the invention, the gateway device is adapted to communicate by employing a transport package channel in order to become independent from gateways already installed.

Additionally, the gateway device is capable of loading dynamically software modules from a database in order to support new services and/or devices.

Gateway devices added to a network may be configured automatically and services and/or devices on the connected networks are announced in all other networks.

It is also preferred that multimedia streams are transmittable through transport-specific isochronous channels within the network.

According to a further preferred embodiment of the present invention, the gateway device is capable of routing multimedia streams across the network to a transparent isochronous channel.

According to a further aspect of the present invention, the gateway device is adapted to route multimedia streams between sources and/or sinks directly controlled by an additional control device.

Preferably, a transcoder is provided which may transcode between different streaming formats and/or multimedia codecs.

As a further preferred embodiment of the present invention, the transcoder at any location in the network may transcode between different streaming formats and/or multimedia codecs.

These and further aspects are further elucidated taking reference to the following remarks:

There is a need to exchange data between various multimedia devices, for instance within a network of devices which are connected to at least one network bus. These devices are usually connected to or possess different wired or wireless communication systems respectively wireless communication systems. In order to exchange control data, status data, stream data, etc., these wired or wireless communication systems need to be connected.

Usually this is done by a gateway or bridge device, which interfaces to the different physical layers and maps the commands and data, for instance by using said network bus. Due to the large number of existing physical layers, devices, command sets, and data stream formats there are a lot of different gateways needed.

In fast changing environments like in home-, car- or telecommunication networks, new devices with new protocols or data formats need to be connected. This causes big problems with such kind of static gateways, which don't know the new protocols, command sets and data formats.

The idea of the invention is to solve this problem by a generic gateway architecture.

This means the generic architecture allows to plug in any number of bus drivers depending on the configuration and tasks of the gateway. The modules for the protocol conversions are loaded dynamically, depending on the connected devices and wired or wireless communication systems. Also the data stream encoder/decoder are loaded dynamically depending on the needs of the different stream formats.

Besides this the presentation of the device can be obtained dynamically.

So it is ensured that the entire architecture is fully generic and flexible. The software does not need to be changed if new devices are connected and no new protocols need to be translated or new data formats need to be en-, de- or transcoded.

State of the art gateways have a dedicated architecture mapping the input messages/data streams to output messages/data streams. Up to now there is no known gateway, utilizing the ideas of this invention.

The main advantage of this invention is that the consumer can connect new devices with new protocols, command sets and data formats to the network without taking care of the gateway. This architecture also eases the design of future proof gateways and it gives more flexibility in planning and designing the network topologies.

The aspects of the present invention that are further elucidated taking reference to the accompanying Figures based on preferred embodiments of the present invention.
- Fig. 1: is a schematical block diagramm describing a first example of a network scenario employing an embodiment of the inventive gateway device.
- Fig. 2: is an example of an in-car network employing an example of the inventive gateway device.
- Fig. 3: is an example of an in-car network using an embodiment of the inventive gateway device.
- Fig. 4: is a further example of an in-car network employing an embodiment of an inventive gateway device.
- Fig. 5: examplifies the concept of a virtual network.
- Fig. 6: demonstrates an embodiment of the overall architecture of the inventive gateway device.
- Figs. 7a-d: illustrate a communication flow chart of an example scenario of the inventive gateway device.
- Fig. 8: illustrates a further embodiment of the inventive gateway device.
- Fig. 9: illustrates still a further embodiment of the inventive gateway device.

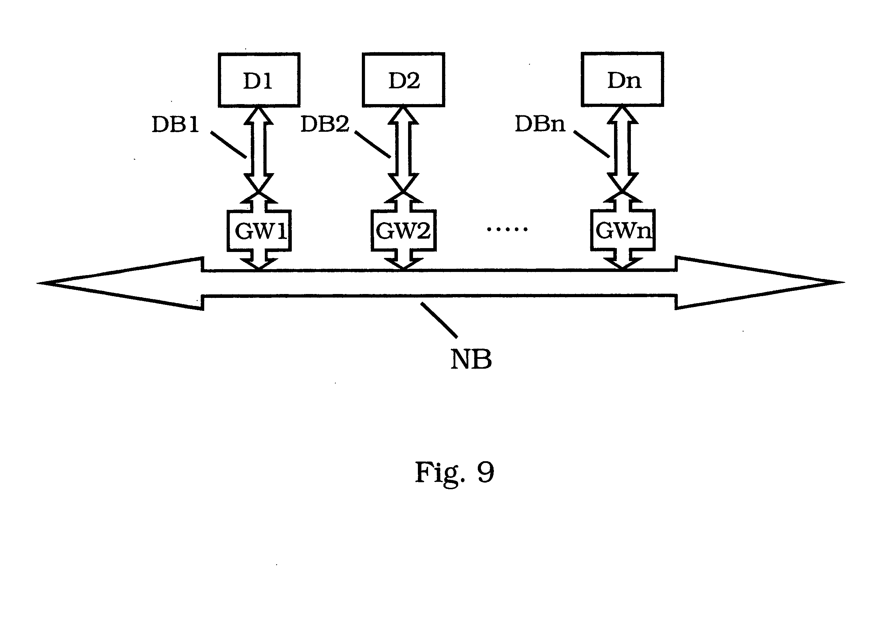

First of all, the concept of the inventive gateway device and its functionalities are illustrated taking reference to Fig. 9, which shows by means of a schematical block diagram a network, comprising a network bus NB to which devices D1, ..., Dn are connected. Each of said devices D1, ..., Dn comprises a distinct device bus DB1, ..., DBn. To realize the connection and communication between said device buses DB1, ..., DBn and said network bus NB, each of said devices D1, ..., Dn comprises an embodiment GW1, ..., GWn of the inventive gateway device GW, which is capable to realize the connection and the communication in a dynamical and flexible way.

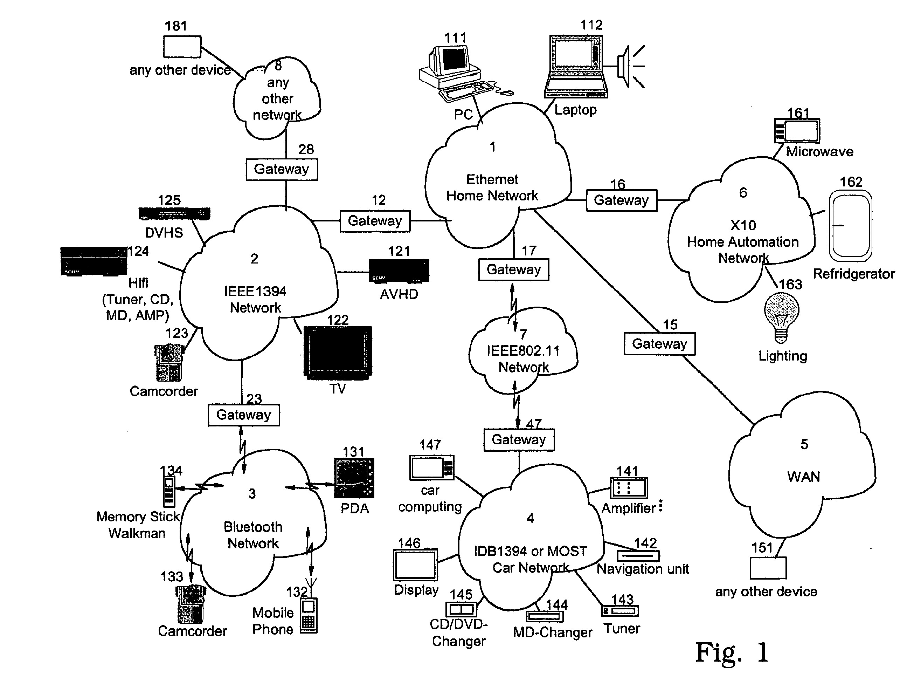

A typical network scenario employing the invention is shown in Figure 1. There is a wide range of different networks used for different applications. You find a usual computer network 1 with WAN access 5 and a connection to a wireless LAN 7, as well as a home automation network 6 or a multimedia network 2 car network 4 or at least a personal network 3 or any other networks 8. Inside of each network there are a lot of devices 111-163 plugged in, e. g. an amplifier 124 a camcorder 123, a TV 122 and an audio/video hard drive 121 are connected to the IEEE1394 multimedia network 2

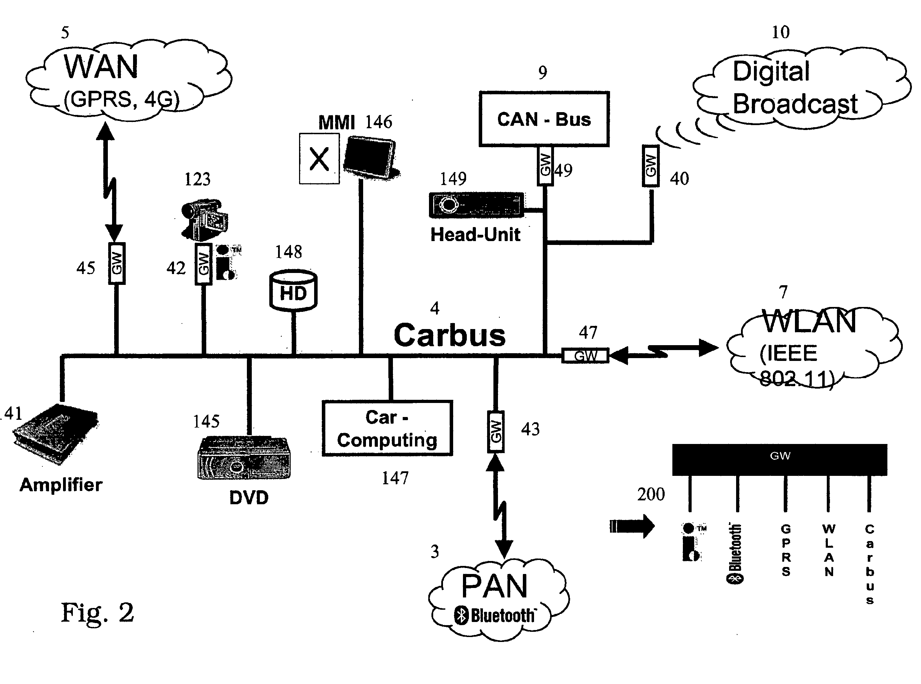

Figure 2 focuses on a network scenario in a car. Directly plugged into the car bus are devices like the DVD-player 145 the MMI 146 used to control the devices and as a monitor for videos, the amplifier 141 to playback audio, a car-computer 147 e. g. for navigation and a head-unit 149 with integrated tuner. To plug in additional devices like a camcorder 123 a Gateway 42 to the car bus 4 is needed, because usually the camcorder has no car bus connector.

To communicate between all networks 1-10 in other words between all devices 111-163 and to transfer data to other networks, the networks are interconnected using gateways 11-49. These gateways could be usual access points 17 to connect an Ethernet to a WLAN or just a modem for the WAN access 15. But to discover all devices and services transparent against each other and to communicate and transmit data between these devices of different networks the generic gateway described in this document is required.

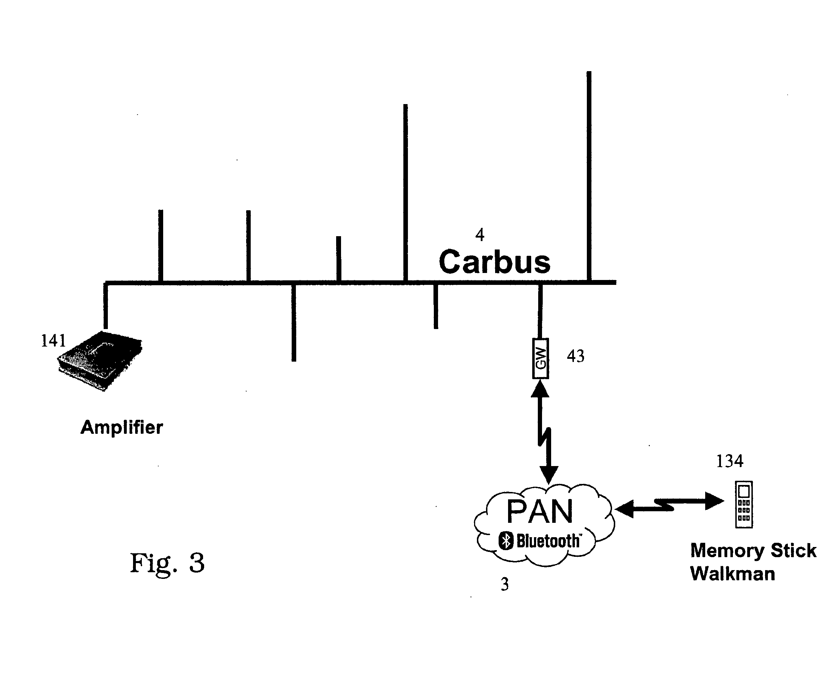

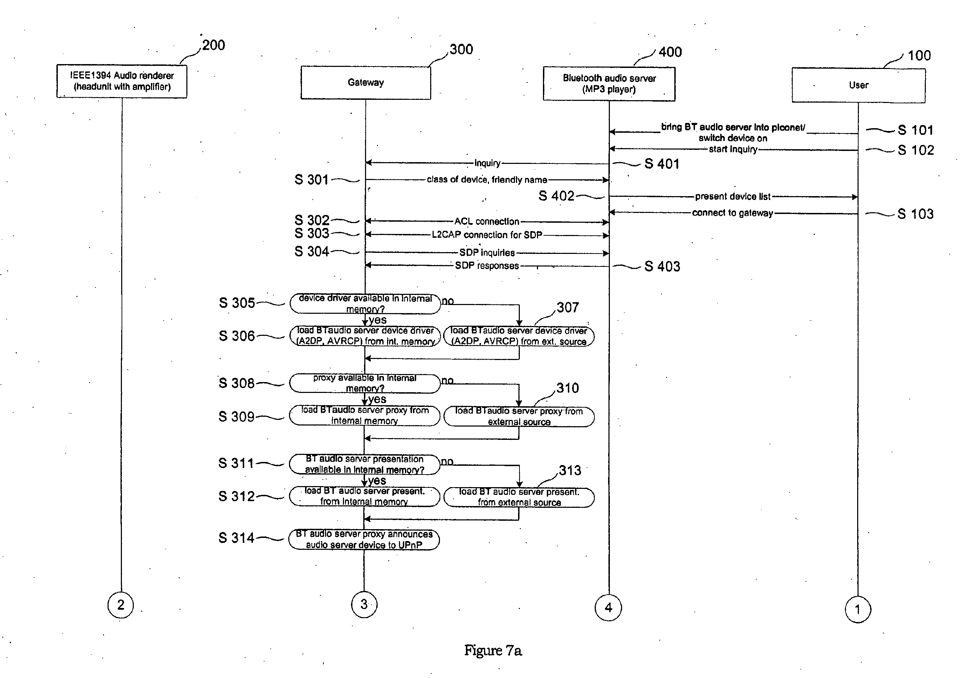

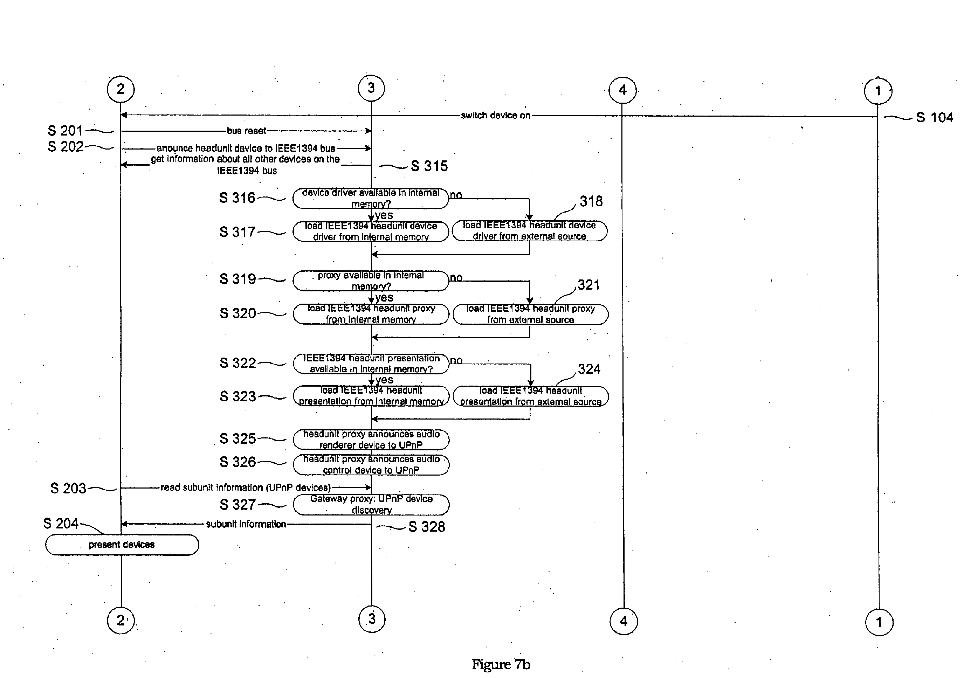

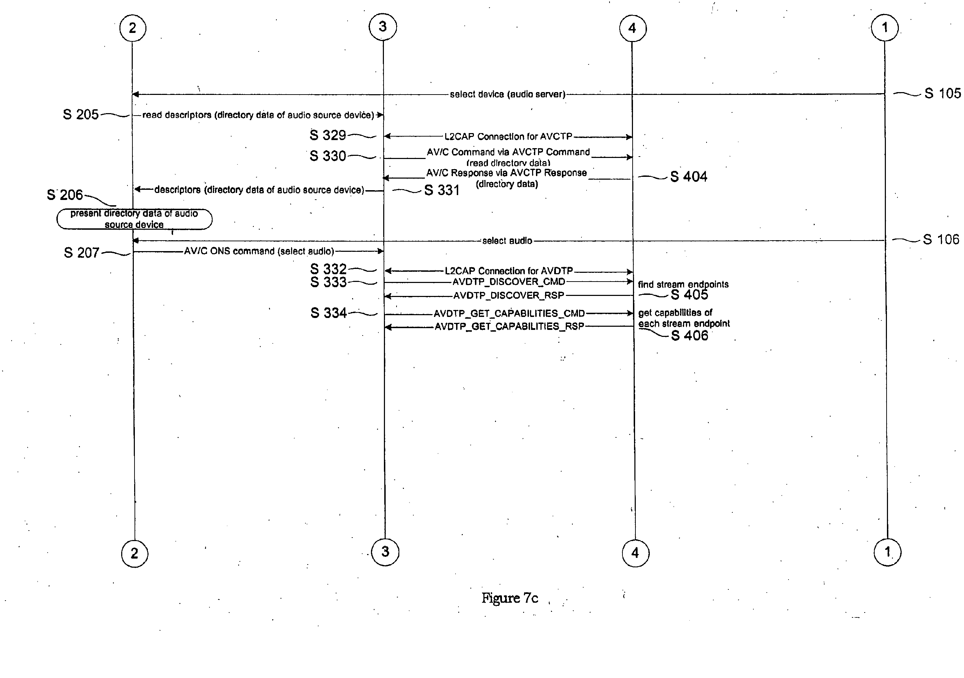

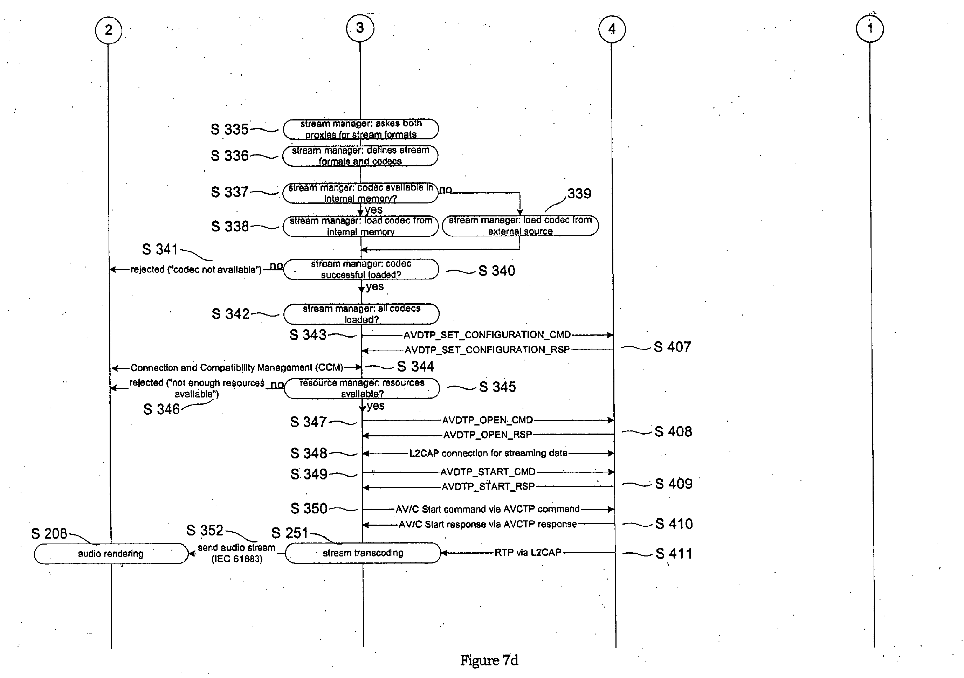

Again in the car scenario of Figure 2 the gateways 40-49 submit this interoperability and communication of all devices across the car-bus / car-network restrictions. An example of audio streaming from your personal Bluetooth MP3-player 134 to the car speakers using the car amplifier 141 is shown in Figure 3. The description in detail of the communication between both devices over the gateway you can see below in the sequence chart in Figure 7.

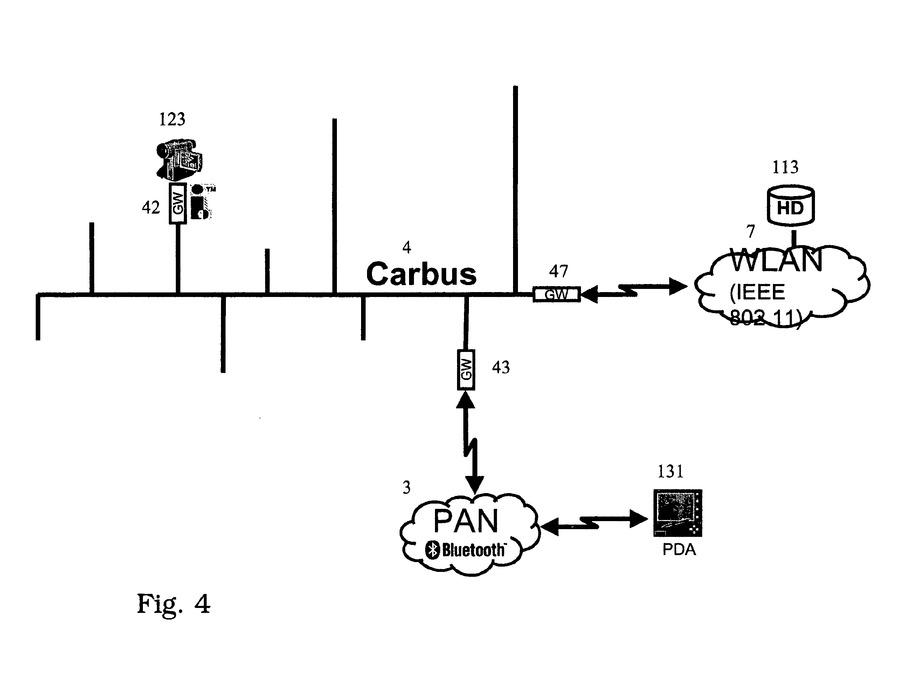

The generic characteristic of the gateway illustrates Figure 1. The gateway allows any combination of interconnection between different networks. This possibility shows the schema 200 in Figure 2. The generic characteristic offers also the advantage that you have to implement the "generic" part of the gateway for a new network only once, afterward it is possible by the gateway to connect to all other known and implemented networks. Also complex combinations of networks are allowed. With the generic gateway a transparent communication between devices separated through a third network is given. For example in Figure 4 the video data from an IEEE1394 camcorder 143 are transmitted over the gateway 42 through the car bus 4 and again over a generic gateway 47 to the hard drive 113 inside the WLAN network 7. This action is triggered and controlled by the PDA 131, a third device which belongs to a Bluetooth piconet 3, a forth network also connected to the car bus via a gateway 43.

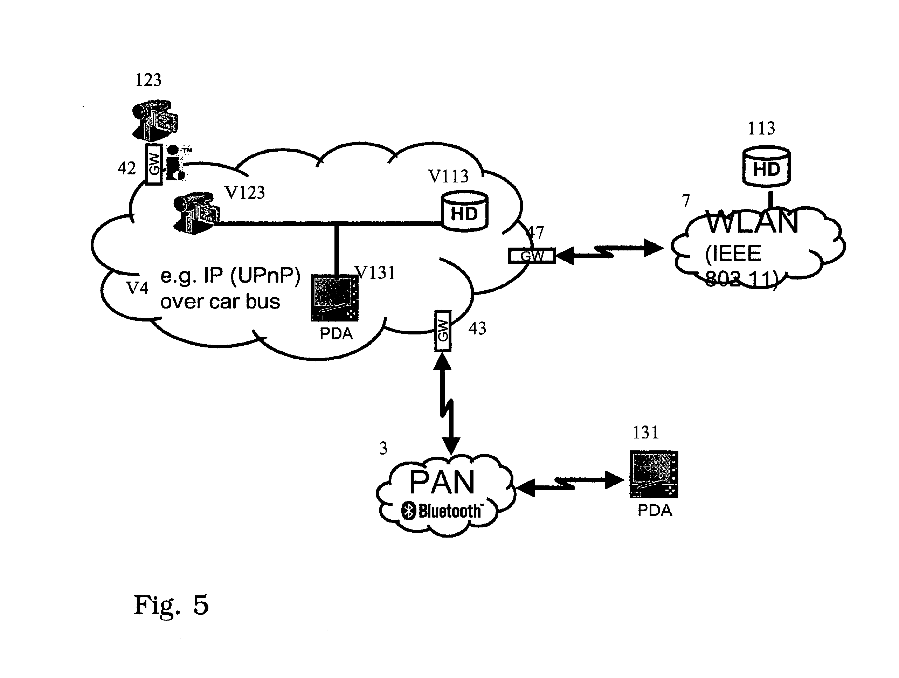

The idea of the generic gateway is, to bring all devices of all different networks to a uniform abstract communication layer in this way, that kinds of "virtual" devices represented by the gateways can communicate directly between each other. This abstract communication layer could be e.g. UPnP over IP. In this case all gateways establish an IP communication network using the car bus as a backbone for IP tunneling. The result is shown in Figure 5, where the generic gateways 42, 43, 47 enable "virtual" devices V113, V123, V131. Thereby the devices can control or send events directly to each other inside the communication network V4. The Gateways have to translate the actions from the virtual devices to the real devices. Also the generic gateways offer the possibility for transmission of isochronously data between devices. This is described in the architecture description in detail.

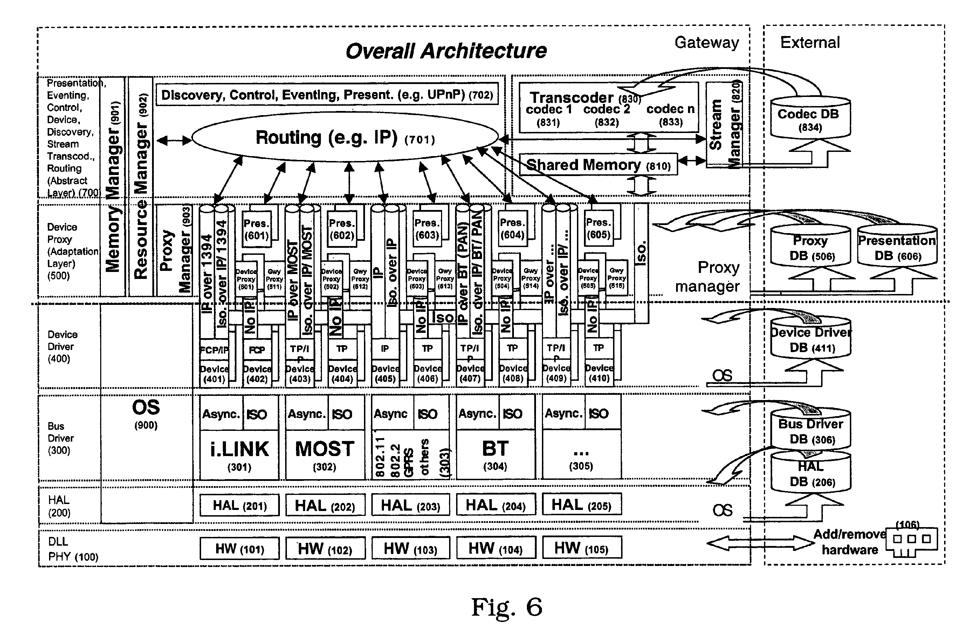

Figure 6 shows the architectural overview of the generic gateway.

This figure shows an example for interfacing to/between non-IP networks like i.LINK, MOST, Bluetooth and to/between typical IP networks like IEEE 802.11, IEEE 802.2, GPRS, etc. All these wired or wireless communication systems are referred hereafter as wired or wireless communication systems.

The architecture also allows to integrate other existing or future systems as well 105, 205, 305, .... The different wired or wireless communication systems can be used in any combination in this architecture. Basically it is a layered architecture over all wired or wireless communication systems.

The present invention in particular concerns the features shown above the device drivers (dotted line). Nevertheless the whole architecture shall be described hereafter.

The different wired and wireless wired or wireless communication systems are interfaced to the physical and data link layer 100. There are different hardware blocks 101..106 for each wired or wireless communication system. If new wired or wireless communication systems are needed, new hardware 106 could be added. If some hardware is not needed anymore, it could be removed and all the drivers are uninstalled.

But the architecture can also be applied to none open embedded systems. In this case no hardware can be added or removed after production. So the gateway is fixed on the wired or wireless communication systems, but still flexible in the number/kind of supported devices. But in this case the number of supported wired or wireless communication systems can be increased by addition of additional gateways to the network.

In order to interface the hardware 301, ..., 305 to the bus driver, there is a hardware adaptation layer HAL, 200 underneath. This allows the usage of the same bus driver on different hardware or hardware from different vendors for that particular wired or wireless communication system. The HALs are installed from the internal memory, flash, hard disc, etc., or from external data bases Internet, floppy disc, CD-ROM, etc., 206 as soon as new hardware is detected in the gateway on layer 100. Usually this is initiated by the operating system 900.

Bus specific functionality is realized in the bus driver 301, ..., 305. They provide interfaces for asynchronous and isochronous data to the higher layers and they are installed from the internal memory, flash, hard disc, etc., or from external data bases Internet, floppy disc, CD-ROM, etc., 306 as soon as new hardware is detected in the gateway on layer 100. Usually this is initiated by the operating system 900.

As soon as new devices are connected to the wired or wireless communication systems, the corresponding device driver 400 are loaded from the internal memory flash, hard disc, etc., or from external data bases, Internet, floppy disc, CD-ROM, etc., 306. Usually this is initiated by the operating system 900.

The device driver 400 interfaces to the bus driver 300 on the lower side and to the Adaptation layer 500 on upper side.

The adaptation layer consists of several modules called proxies and presentations. These modules are loaded from the internal memory, flash, hard disc, etc., or from external data bases Internet, floppy disc, CD-ROM, etc., 506, 606. The proxy manager 903 loads and unloads the device proxies 501, ..., 505 and gateway proxies 511, ..., 515 and presentations 601, ..., 605.

The proxies provide the adaptation of the device driver API's to the abstract layer 600. This comprises the adaptation/translation of the specific device and service discoveries, command sets (control), eventing, etc. to the equivalent abstract discovery, control, eventing, etc. functionalities. The device proxies present the device functionality to the abstract layer and the gateway proxies present all the abstract services (presented by the proxies of other wired or wireless communication systems) to the native wired or wireless communication system.

In order to prevent more adaptations/translations than necessary there is the possibility (not necessarily) to tunnel the abstract layer (e. g. IP) over several wired or wireless communication systems without additional adaptation/translation.

The presentations are also loaded in conjunction with the proxies for each device. The presentations are used as interface of the device functionality to the user. These presentations might be directly used or can be overruled by the control device, if the control device wants to present the device in a different way to the user.

The abstract layer 600 could leverage existing technologies. This could be e. g. UpnP for the device and service discovery, control, eventing and presentation; and e. g. IP for the addressing and routing within the abstract layer 600.

Because the streams (isochronous or synchronous) on different wired or wireless communication systems are encoded in different formats, there is a trans-coding needed, in order to ensure the interoperability between those devices. The stream data are processed by one or several codecs. The stream manager determines which coding schemes are needed. The codecs are loaded from the internal memory, flash, hard disc, etc., or from external data bases, Internet, floppy disc, CD-ROM, etc., 834.

In order to prevent more stream trans-codings than necessary, there is the possibility (not necessarily) to tunnel the stream data in the transport protocol of the abstract layer (e.g. IP) over several wired or wireless communication systems.

The codecs and the streams are interfaced by shared memory 810, which is also managed by the stream manger. The connection management between the different devices is also a task of the stream manager.

The resource manager 902 is aware of all the bus resources (bandwidths, number of streams, etc.). The resource manager is responsible for rejecting those requests which would go beyond the available resources.

The memory manager 901 is managing the available internal memory of the Gateway. This could be part of the operating system or be a separate instance.

The sequence chart of Figures 7a to d shows the phases that are involved in a scenario where a gateway merges a IEEE 1394 bus and a Bluetooth piconet. The sequence chart describes a scenario in which a user wants to play a piece of music from his portable Bluetooth player on an amplifier that is part of a IEEE 1394 ensemble. Because the amplifier does not have a Bluetooth interface, a gateway is needed to allow this operation.

As can be seen in Figures 7a to d, in a first step the user 100 switches on the portable Bluetooth audio player, the Bluetooth audio server, 400 and starts an inquiry on the Bluetooth piconet S 101, 102. After the gateway answers with a friendly name and a Bluetooth device list is presented to the user, the user connects the player via the Bluetooth air interface to the gateway 300, S401, 301, 402, 103. The Bluetooth piconet between player and gateway with ACL connection, SDP inquiries and responses is established S302 - 304, 403.

The gateway recognizes the audio functionality of the portable player, looks up in his memory for an available device driver and loads the driver from the internal memory or from an external source S305 - 307. The proxy manager of the gateway installs a proxy corresponding to the Bluetooth player and knows also if the proxy is available in the internal memory or from an external source S308 - 310. This is done optional also for one or more Bluetooth audio server presentations S311 - 313. Now the gateway more exact the Bluetooth audio proxy announces the audio server device to UPnP S314.

For the next step the user switches the IEEE 1394 audio renderer 200 on S104. This triggers a bus reset to the IEEE 1394 bus and the audio renderer announces the headunit device to the IEEE 1394 bus S201, 202. This time the gateway looks for the device and proxy drivers and presentation of the audio renderer and loads them from the internal memory or an external source. This time the headunit proxy advertises the two devices audio renderer and audio control to UPnP.

The audio renderer reads the subunit information of the gateway, which are the UPnP devices represented by the gateway proxy. Therefore the gateway proxy discovers all UPnP devices and sends the subunit information back S203, 327, 328. This information is presented inside the audio renderer S204.

At the time all devices are presented to the user via the display of the headunit 200, the user selects the audio server by the MMI of the headunit S105.

Then the headunit requests the directory data of the audio source device S205 from the gateway proxy. The Bluetooth audio server proxy then sets up a L2CAP connection for AVDTP S329 and reads the directory data from the Bluetooth audio server S330, S404. Then the gateway proxy transfers the directory data to the headunit S331. The headunit is presenting the directory data to the user S206.

When the user makes a selection S106, an AV/C object number select command ONS is sent to the gateway proxy S207. The Bluetooth audio server proxy then sets up a L2CAP connection for AVDTP S332 and then it finds the stream endpoints by sending a AVDTP_DISCOVER_CMD S333)and receiving a AVDTP_DISCOVER_RSP S405 from the Bluetooth audio server. Then the Bluetooth audio server proxy gets the capabilities of each stream endpoint by sending a AVDTP_GET_CAPABILITIES_CMD (S334) and receiving a AVDTP_GET_CAPABILITIES_RSP from the from the Bluetooth audio server S406.

Then the stream manager asks both proxies for their supported stream formats S335 and defines the stream format for this transmission. Then the stream manager loads the appropriate codecs either from the internal memory or if not available from an external source S337, ..., S339. If the codec(s) could not be loaded successfully the stream manger asks the gateway manager to reject the AV/C ONS command.

If the codec(s) were loaded successfully the Bluetooth audio server proxy sends a AVDTP_SET_CONFIGURATION_CMD S343 to the Bluetooth audio server and the Bluetooth audio server then acknowledges the configuration settings by sending a AVDTP_SET_CONFIGURATION_RSP S407.

The IEEE1394 headunit proxy establishes a connection with the headunit by using CCM (Connection and Compatibility Management) commands S344.

If there are not enough resources to perform the audio streaming, the AV/C ONS command is rejected S346.

If the resources are sufficient, the Bluetooth audio server proxy sends commands S347, ..., S350 to the Bluetooth audio server in order to open and start the stream. This is acknowledged by the audio server S408, ..., S410.

Then the audio server starts sending audio stream data via RTP/L2CAP to the gateway. The codec will decode the SBC audio data to PCM audio data S251 which will be send in the IEC60958 format on IEEE1394 to the headunit S352.

The headunit performs the audio rendering S208 based on the received data.

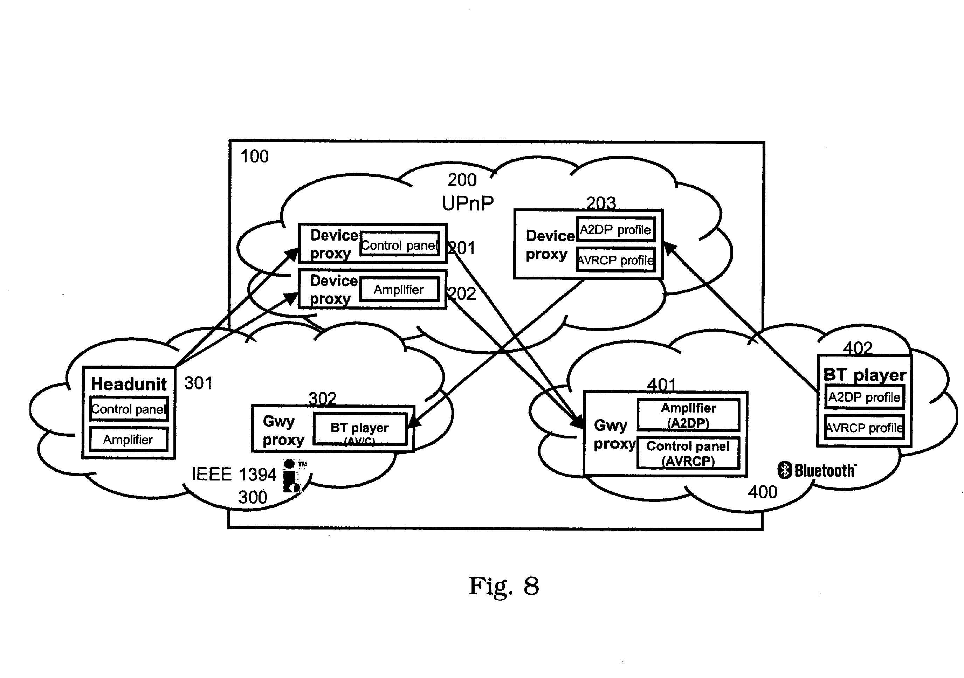

Figure 8 shows the devices from the example "audio streaming from Bluetooth audio server to IEEE 1394 audio renderer" in three different views. The devices appear each with in the different networks variable.

The first view of the scenario is the view of the IEEE 1394 bus. Connected to the IEEE 1394 bus are the audio renderer (headunit 301) and the gateway 100 represented itself by the gateway proxy 302. This proxy covers all devices discovered inside the UPnP network 200 as subunits to the IEEE1394 bus. This excludes only devices of the own bus. In the figure the gateway proxy 302 announces the Bluetooth player as a subunit of the gateway to the IEEE 1394 bus.

Inside the gateway there is the abstract communication layer, which is a second view of the devices. This could be implemented using an IP network with UPnP 200. Each device proxy of the gateway represents a corresponding UPnP device in the IP network. As can be seen in the figure, two device proxies 201, 202 announce the two subunits of the headunit 301 to the UPnP network. The third proxy 203 represents the audio player 402 of the Bluetooth piconet.

From the view of the Bluetooth piconet, there exist the two Bluetooth devices player 402 and gateway 401. Each of the devices supports the A2DP and AVRCP profile, whereby the gateway proxy 401 represents the IEEE 1394 audio renderer 301.

## Claims

1. Gateway device for connecting and communicating between at least a first and a second bus system or wired or wireless communication system,
**characterized in**
**that** said gateway device (GW) is a generic gateway device being dynamical and/or adjustable with respect to the addition and/or removal of at least one bus system (DBj, NB) or wired or wireless communication system, protocol conversion or protocol conversion data, data stream encoder and/or decoder and/or data thereof, bus or device presentation data and/or the like.

2. Gateway device according to claim 1,
which is adapted to dynamically load and/or remove protocol conversion data or modules for protocol conversions, in particular depending on buses, devices, wired and/or wireless communication systems to be connected.

3. Gateway device according to anyone of the preceding claims,
which is adapted to dynamically load and/or remove data stream decoder and/or data stream encoder data, in particular depending on the needs of different data stream formats.

4. Gateway device according to anyone of the preceding claims,
which is adapted to dynamically obtain, load and/or remove bus or device presentation data.

5. Gateway device according to anyone of the preceding claims,
which is adapted to bring and/or represent devices and/or wired or wireless communication systems to be connected to and on a uniform and abstract communication layer.

6. Gateway device according to claim 5,
which is adapted to enable the generation and representation of virtual devices which directly correspond to physical devices and/or wired or wireless communication systems to be connected.

7. Gateway device according to claim 6,
which is adapted to enable and/or establish direct communication of said virtual devices.

8. Gateway device according to anyone of the claims 5 to 7,
wherein said abstract communictaion layer contains or is built-up by an UPnP-structure over an IP-structure.

9. Gateway device according to anyone of the preceding claims,
which is capable of interfacing to and/or between non-IP-networks, in particular i.LINK, MOST, Bluetooth struture and/or the like.

10. Gateway device according to anyone of the preceding claims,
which is capable of interfacing to and/or between IP-networks, in particular IEEE 802.11, IEEE 802.2, GPRS-structures, and/or the like.

11. Gateway device according to anyone of the preceding claims,
which contains and/or realizes a physical and data link layer (100, PHY, DLL) which is in particular capable of having wired or wireless communication systems interfaced thereto.

12. Gateway device according to claim 11,
which comprises for each wired or wireless communication system to be interfaced different hardware blocks (HW, 101, ..., 106) provided within said physical and data link layer (100, PHY, DLL).

13. Gateway device according to anyone of the preceding claims,
which contains and/or realizes a bus driver layer (300) having a bus driver (301, ..., 305) for each of said wired or wireless communication systems to be connected and/or to be interfaced.

14. Gateway device according to claim 13,
which contains and/or realizes hardware adaptation layers (HAL, 200, ..., 205) for each of said wired or wireless communication systems to be connected and/or to be interfaced so as to enable interfacing between said hardware blocks (HW, 101, ..., 106) and said bus driver layers (300).

15. Gateway device according to claim 14,
which is capable of installing said hardware adaptation layers (HAL, 200, ..., 205) from an internal memory and/or from a first external data base (HAL DB, 206), in particular from a hardware adaptation layer data base (HAL DB, 206), in particular upon detection of newly connected hardware and/or in particular under control of an operating system (OS, 900).

16. Gateway device according to anyone of the claims 13 to 15,
wherein specific functionalities are realized in the distinct bus drivers (301, ..., 305) which are in particular capable of providing interfaces of asynchronous or isochronous data to higher layers.

17. Gateway device according to anyone of the claims 13 to 16,
which is capable of installing and/or loading said bus drivers (301, ..., 305) from an internal memory and/or from an external data base or bus driver data base (BUS DRIVER DB, 306) in particular upon detection of newly installed connected hardware and/or in particular under control of an operating system (OS, 900).

18. Gateway device according to anyone of the preceding claims,
which contains and/or realizes a device driver layer (400) having in particular a plurality of device drivers (401, ..., 410).

19. Gateway device according to claim 18,
which is capable of installing and/or loading said device drivers (401, ..., 410) from an internal memory and/or from an external data base, in particular from a device driver data base (device driver DB, 411), in particular upon detection of newly connected hardware and/or in particular under control of an operating system (OS, 900).

20. Gateway device according to anyone of the preceding claims,
which contains and/or realizes an adaptation layer (500) or device proxy layer (500) having a plurality of modules (501, ..., 505, 511, ..., 515) and/or a plurality of presentations (601, ..., 605).

21. Gateway device according to claim 20,
wherein said modules (501, ..., 505, 511, ..., 515) are realized as device proxies (501, ..., 505) and/or as gateway proxies (511, ..., 515).

22. Gateway device according to anyone of the claim 20 or 21,
wherein said device driver layer (400) and in particular said device drivers (401, ..., 410) are adapted to interface between said bus driver layer (300) and in particular to said bus drivers (301, ..., 305) and to said adaptation layer (500) or said device proxy layer (500).

23. Gateway device according to anyone of the claims 20 to 22,
wherein said adaptation layer (500) or device proxy layer (500) is capable of installing and or loading said modules (501, ..., 505, 511, ..., 515) and/or said presentations (601, ..., 605) from an internal memory and/or from a proxy data base (proxy DB, 506) and from a presentation data base (presentation DB, 606), respectively, in particular upon detection of newly connected hardware and/or in particular under control of an operating system (OS, 900).

24. , Gateway device according to anyone of the claim 20 to 23,
wherein a proxy manager (903) is provided which is adapted to load and/or unload said device proxies (501, ..., 505), gateway proxies (511, ..., 515) and/or said presentations (601, ..., 605).

25. Gateway device according to anyone of the preceding claims 20 to 24,
wherein said plurality of presentations (601, ..., 605) is adapted to form an abstract layer (600).

26. Gateway device according to anyone of the preceding claims 20 to 25,
wherein said modules or proxies (501, ..., 505, 511, ..., 515) are capable of providing an adaptation of device driver APIs to the abstract layer (600), said adaptation comprising the adaptation and/or translation of the specific device and services discoveries, command sets, eventing, and/or the like to respective equivalent abstract discovery, control, eventing functionalities, respectively.

27. Gateway device according to anyone of the preceding claims 20 to 26,
wherein said device proxies (501, ..., 505) are capable of presenting device functionalities to said abstract layer (600).

28. Gateway device according to anyone of the preceding claims 20 to 27,
wherein said gateway proxies (511, ..., 515) are capable of presenting abstract services - in particular presented by proxies of other wired or wireless communication systems - to the native wired or wireless communication system.

29. Gateway device according to anyone of the preceding claims 20 to 28,
which is capable of tunnelling said abstract layer (600) of several wired or wireless communication systems to be connected and/or interfaced, in particular without additional adaptation or translation.

30. Gateway device according to anyone of the preceding claims 20 to 29,
wherein said abstract layer (600) is capable of employing an UPnP-structure for said services discovery, control, eventing and/or presentation functionalities.

31. Gateway device according to anyone of the preceding claims 20 to 30,
wherein said abstract layer (600) is capable of employing an IP-structure for addressing and routing said abstract layer (600).

32. Gateway device according to anyone of the preceding claims 20 to 31,
which is adapted for loading said presentations (601, ..., 605) together or in conjunction with said modules or proxies (501, ..., 505, 511, ..., 515).

33. Gateway device according to anyone of the preceding claims 20 to 32,
which is adapted to use said presentations (601, ..., 605) as interfaces of functionalities to an external user.

34. Gateway device according to anyone of the preceding claims 20 to 33,
which is adapted to use said presentations (601, ..., 605) directly or in a way overruled by a control device so as to represent a given device to an external user in a different way.

35. Gateway device according to anyone of the preceding claims,
which is capable of transcoding streams of data on different wired or wireless communication systems so as to ensure interoperability of devices to be connected or interfaced.

36. Gateway device according to claim 35,
wherein one or a plurality of codecs (831, 832, 833) is provided for processing said streams of data and in particular for carrying out said transcoding.

37. Gateway device according to anyone of the claims 35 or 36,
wherein a stream manager (820) is provided for determining necessary coding schemes.

38. Gateway device according to anyone of the preceding claims 35 to 37,
which is capable of installing and/or loading said codecs (831, 832, 833) from an internal memory and/or from an external codec data base (CODEC DB, 834), in particular upon detection of newly connected hardware and/or in particular under control of an operating system (OS, 900).

39. Gateway device according to anyone of the preceding claims 35, to 38,
which is capable of tunnelling said stream data in the transport protocol of said abstract layer (600) or over several wired or wireless communication systems to be connected and/or interfaced.

40. Gateway device according to anyone of the preceding claims 35 to 39,
wherein a shared memory (810) is provided for interfacing said codecs (831, 832, 833) and said stream data.

41. Gateway device according to claim 40,
wherein said shared memory (810) is adapted to be managed by said stream manager (820).

42. Gateway device according to anyone of the preceding claims 37 to 41,
wherein said stream manager 820) is adapted to manage connections between different devices.

43. Gateway device according to anyone of the preceding claims,
wherein a resource manager (902) is provided which is adapted to be aware of bus resources, such as bandwidths, numbers of streams, and/or the like.

44. Gateway device according claims 43,
wherein said resource manager (902) is adapted to be responsible for rejecting requests which go beyond said available resources.

45. Gateway device according to anyone of the preceding claims,
wherein a memory manager (901) is provided for managing available internal memories of said gateway device (GW).

46. Gateway device according to claim 45,
wherein said memory manager (901) is a part of the operating systems (OS, 900).

47. Gateway device according to anyone of the preceding claims,
wherein flash memories, hard disc memories, and/or the like are provided as internal memories.

48. Gateway device according to anyone of the preceding claims,
wherein internet sources, floppy discs, CD-ROMs and/or the like are provided as external memories, in particular as said external databases.

49. Gateway device according to anyone of the preceding claims,
which is adapted for interconnecting different kinds of networks on both the transport layer and the application layer and which has the flexibility to support future services and/or devices on said different kinds of networks.

50. Gateway device according to anyone of the preceding claims,
which is adapted to use services and/or devices across different kinds of networks.

51. Gateway device according to anyone of the preceding claims,
which is adapted to offer full support to add new network technologies on both the transport layer and the application layer, in particular by simply adding new gateways to an existing network without changing existing gateways.

52. Gateway device according to anyone of the preceding claims,
which is adapted to achieve service interoperability by a common service discovery protocol.

53. Gateway device according to anyone of the preceding claims,
which is adapted to map transport-specific service definitions to common service discovery protocols.

54. Gateway device according to anyone of the preceding claims,
which is adapted to perform communication to other external gateway devices by a transparent packet channel so as to become independent from said external gateway devices already installed to a network.

55. Gateway device according to anyone of the preceding claims,
which is adapted to dynamically load software modules from a database in order to support new services and/or devices.

56. Gateway device according to anyone of the preceding claims,
which is adapted to automatically be configured when installed to a network.

57. Gateway device according to anyone of the preceding claims,
which is adapted to announce services and devices of a network to other networks to be connected or which are connected.

58. Gateway device according to anyone of the preceding claims,
which is adapted to transmit multimedia data streams through transport-specific isochronous channels within the network.

59. Gateway device according to anyone of the preceding claims,
which is adapted to route multimedia data streams across a network through a transparent isochronous channel.

60. Gateway device according to anyone of the preceding claims,
which is adapted to route multimedia streams between sources and sinks in a way directly controlled by an additional control device.

61. Gateway device according to anyone of the preceding claims,
wherein a transcoder is capable of transcoding between different stream and formats and multimedia codecs.

62. Gateway device according to anyone of the preceding claims,
wherein a transcoder at any location in the network is capable of transcoding between different streaming formats and multimedia codecs.
